# EUROPEAN PATENT APPLICATION

(11) **EP 3 734 535 A1**
(43) Date of publication of application: **04.11.2020**
(21) Application number: 19852995.0
(22) Date of filing: 25.06.2019
(51) Int. Cl.: G06Q 30/00

(54) **METHOD AND APPARATUS FOR IDENTIFYING AUTHENTICITY OF EVIDENCE OF BOTH PARTIES BASED ON BLOCKCHAIN EVIDENCE PRESERVATION**

(30) Priority: 21.08.2018 CN 201810954364
(71) Applicant: ADVANCED NEW TECHNOLOGIES CO., LTD., George Town, Grand Cayman KY1-9008 (KY)
(72) Inventor: YANG, Xinying, Hangzhou, Zhejiang 311121 (CN)
(74) Representative: Goddar, Heinz J.
(86) International application number: PCT/CN2019/092637
(87) International publication number: WO 2020/038096

(57) **Abstract**

Disclosed are a method and apparatus for identifying authenticity of two parties' evidence based on a blockchain ledger. For a certain case event that the accusant of the case claims to be real, the accusant's accusation evidence for supporting the case event is identified through the target procedure; in addition, the respondent's responding evidence for falsifying the case event is identified through the target procedure. The target procedure is: identifying target electronic evidence, providing a relatively high authenticity reference score for the target electronic evidence when it is determined that the target electronic evidence has been stored by at least one candidate blockchain ledger platform, and providing a relatively low authenticity reference score for the target electronic evidence when it is determined that the target electronic evidence is not stored by the at least one candidate blockchain ledger platform.

## Description

### TECHNICAL FIELD

Implementations of the present specification relate to the field of information technology, and more particularly, to a method and apparatus for identifying authenticity of two parties' evidence based on a blockchain ledger.

### BACKGROUND

At present, it is not easy for a judicial official (such as a judge or a prosecutor) to examine whether electronic evidence (which can be evidence generated in an electronic form or can be an electronic form of physical evidence) submitted by an accusant and a respondent is authentic and has not been tampered with. In some cases, a judicial official mistakenly identifies electronic evidence that has been tampered with as authentic electronic evidence.

In view of this, there is a need for a method for identifying authenticity of two parties' evidence to reduce the difficulty of a judicial official in examining the authenticity of electronic evidence.

### SUMMARY

To solve the problem that it is difficult for a judicial official to examine the authenticity of electronic evidence, implementations of the present specification provide a method and apparatus for identifying authenticity of two parties' evidence based on a blockchain ledger. The technical solution is as follows.

According to a first aspect of the implementations of the present specification, a method for identifying authenticity of two parties' evidence based on a blockchain ledger is provided, including: receiving case event information uploaded by an accusant of a case; determining an authenticity reference score corresponding to accusation evidence through a target procedure, the accusation evidence being electronic evidence presented by the accusant to support the case event information; sending the case event information and the accusation evidence to a respondent of the case; and in response to that it is determined that there is responding evidence, determining an authenticity reference score corresponding to the responding evidence through the target procedure, the responding evidence being electronic evidence presented by the respondent to falsify the case event information; where the target procedure includes: determining whether target electronic evidence has been stored by at least one candidate blockchain ledger platform; determining a first score as an authenticity reference score corresponding to the target electronic evidence in response to that it is determined that the target electronic evidence has been stored by the at least one candidate blockchain ledger platform; or determining a second score as an authenticity reference score corresponding to the target electronic evidence in response to that it is determined that the target electronic evidence is not stored by the at least one candidate blockchain ledger platform; where the authenticity reference score corresponding to the target electronic evidence is positively related to an authenticity degree of the identified target electronic evidence, and the first score is greater than the second score.

According to a second aspect of the implementations of the present specification, an apparatus for identifying authenticity of two parties' evidence based on a blockchain ledger, including: a receiving module, configured to receive case event information uploaded by an accusant of a case; an accusation evidence identification module, configured to determine an authenticity reference score corresponding to accusation evidence through a target procedure, the accusation evidence being electronic evidence presented by the accusant to support the case event information; a sending module, configured to send the case event information and the accusation evidence to a respondent of the case; and a responding evidence identification module, configured to: in response to that it is determined that there is responding evidence, determine an authenticity reference score corresponding to the responding evidence through the target procedure, the responding evidence being electronic evidence presented by the respondent to falsify the case event information; where the target procedure includes: determining whether target electronic evidence has been stored by at least one candidate blockchain ledger platform; determining a first score as an authenticity reference score corresponding to the target electronic evidence in response to that it is determined that the target electronic evidence has been stored by the at least one candidate blockchain ledger platform; or determining a second score as an authenticity reference score corresponding to the target electronic evidence in response to that it is determined that the target electronic evidence is not stored by the at least one candidate blockchain ledger platform; where the authenticity reference score corresponding to the target electronic evidence is positively related to an authenticity degree of the identified target electronic evidence, and the first score is greater than the second score.

In the technical solutions provided in the implementations of the present specification, for a certain case event that the accusant of the case claims to be real, the accusant's accusation evidence for supporting the case event is identified through the target procedure; in addition, the respondent's responding evidence for falsifying the case event is identified through the target procedure. The target procedure is: identifying target electronic evidence (accusation evidence or responding evidence), providing a relatively high authenticity reference score for the target electronic evidence when it is determined that the target electronic evidence has been stored by at least one candidate blockchain ledger platform, and providing a relatively low authenticity reference score for the target electronic evidence when it is determined that the target electronic evidence is not stored by the at least one candidate blockchain ledger platform. If the target electronic evidence corresponds to a relatively high authenticity reference score, it indicates that the identified target electronic evidence has a relatively high degree of authenticity (possibility of being authentic) and a relatively low possibility of being tampered with. The electronic evidence that has been stored by the blockchain ledger platform often has a tamper-resistance characteristic, and the authenticity reference score corresponding to the electronic evidence is made based on whether the electronic evidence has been stored by the blockchain ledger platform. As such, the authenticity reference score corresponding to the electronic evidence is used as a reference, so the difficulty of the judicial official in examining the authenticity of the electronic evidence can be significantly reduced.

It should be understood that the general descriptions above and the detailed descriptions below are merely examples and illustrative, and cannot limit the implementations of the present specification.

In addition, any one of the implementations of the present specification does not need to achieve all the effects above.

### BRIEF DESCRIPTION OF DRAWINGS

To describe the technical solutions in the implementations of the present specification or in the existing technologies more clearly, the following briefly describes the accompanying drawings needed for describing the implementations or the existing technologies. Clearly, the accompanying drawings in the following descriptions merely show some implementations of the present specification, and a person of ordinary skill in the art can still derive other drawings from these accompanying drawings.
FIG. 1 is a schematic flowchart illustrating a method for identifying evidence authenticity based on a blockchain ledger according to implementations of the present specification;
FIG. 2 is a schematic flowchart illustrating a method for identifying authenticity of two parties' evidence based on a blockchain ledger according to implementations of the present specification;
FIG. 3 is a schematic structural diagram illustrating an apparatus for identifying evidence authenticity based on a blockchain ledger according to implementations of the present specification;
FIG. 4 is a schematic structural diagram illustrating an apparatus for identifying authenticity of two parties' evidence based on a blockchain ledger according to implementations of the present specification; and
FIG. 5 is a schematic structural diagram illustrating a computer device used to configure a method in implementations of the present specification.

### DESCRIPTION OF IMPLEMENTATIONS

To make a person skilled in the art better understand the technical solutions in the implementations of the present specification, the following describes in detail the technical solutions in the implementations of the present specification with reference to the accompanying drawings in the implementations of the present specification. Clearly, the described implementations are merely some but not all of the implementations of the present specification. All other implementations obtained by a person of ordinary skill in the art based on the implementations of the present specification shall fall within the protection scope of the present specification.

The following describes in detail the implementations of the present specification.

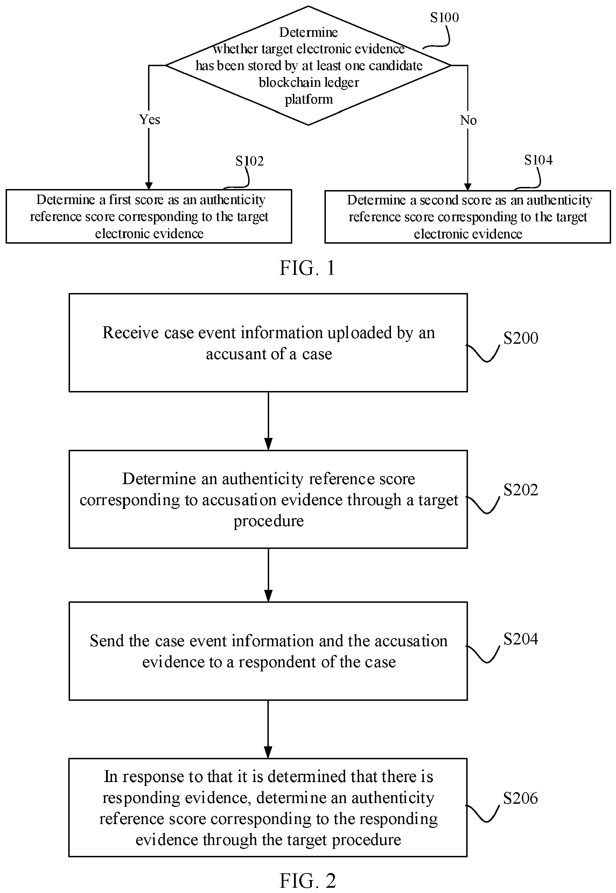

FIG. 1 is a schematic flowchart illustrating a method for identifying evidence authenticity based on a blockchain ledger according to implementations of the present specification, and the method includes the following steps.

S100: Determine whether target electronic evidence has been stored by at least one candidate blockchain ledger platform; perform step S102 in response to that it is determined that the target electronic evidence has been stored by the at least one candidate blockchain ledger platform; or perform step S104 in response to that it is determined that the target electronic evidence is not stored by the at least one candidate blockchain ledger platform.

The method can be executed by a device (referred to as an identification device herein) managed by an entity (such as a court) that requires identification of the authenticity of electronic evidence. More specifically, in practice, the identification device can be an online case acceptance system of a court, and the online case acceptance system accepts a case online, identifies the authenticity of electronic evidence related to the case, and provides an identification result (authenticity reference score corresponding to the electronic evidence) to a judge for reference.

It should be noted that the electronic evidence described herein can be evidence generated electronically (*e.g*., a web page), or can be an electronic form of physical evidence (*e.g.,* a photograph of a signed document acknowledging a debt "an IOU"). It should also be noted that the target electronic evidence refers to electronic evidence to be authenticated, which can be evidence presented by a person on the side of a party who initiates a lawsuit case against another person (referred to as "the accusant" for descriptive purposes), or can be evidence presented by a person on the side of a party who is accused in the lawsuit (referred to as "the respondent"), or can be electronic evidence presented by other relevant persons of the case, such as investigators or a person of interest of the case.

In the implementations of the present specification, the blockchain ledger platform is a service mechanism for storing data uploaded by a user based on the blockchain technology. The user can use the blockchain ledger platform to store electronic evidence that needs to be preserved. Generally, the blockchain ledger platform stores the electronic evidence by using a data structure of a transaction in a blockchain network.

It should be noted that the transaction described in the present specification refers to a piece of data that is created by a user by using a blockchain client and that needs to be finally added to a distributed database of the blockchain. That is, transactions in the blockchain include a transaction in a narrow sense and a transaction in a broad sense. A transaction in a narrow sense refers to a value transfer added by a user to the blockchain. For example, in a conventional Bitcoin blockchain network, a transaction can be a transfer initiated by a user in the blockchain. A transaction in a broad sense refers to service data that is added by a user to the blockchain and that has a service intention. For example, an operator can establish a consortium blockchain based on actual service needs, and deploy some other types of online services (for example, a rental service, a vehicle scheduling service, an insurance claim service, a credit service, and a medical service) that are not related to value transfer in the consortium blockchain. In such consortium blockchain, a transaction can be a service message or a service request that is added by a user to the consortium blockchain and that has a service intention.

Specifically, the blockchain ledger platform can serve as a node in the blockchain network. When receiving the electronic evidence uploaded by the user, the blockchain ledger platform can construct a transaction containing an evidence hash of the electronic evidence (certainly, can also include the electronic evidence itself), and broadcast the constructed transaction to the blockchain network, so each node subsequently stores the transaction into its own blockchain based on a consensus mechanism, thereby realizing multi-party evidence storage of the electronic evidence. Herein, when the transaction contains only the evidence hash of the electronic evidence, because the evidence hash of the electronic evidence has been published or added to the blockchain stored in other nodes, if the electronic evidence is tampered with, the evidence hash of the tampered electronic evidence will be inconsistent with the published evidence hash in the blockchain. Therefore, adding the evidence hash of the electronic evidence to the blockchain is equivalent to storing the electronic evidence by multiple parties. It should also be noted that when the transaction contains only the evidence hash of the electronic evidence, the blockchain ledger platform typically stores the electronic evidence separately in a data warehouse (non-blockchain).

In addition, the blockchain ledger platform can also provide an electronic evidence storage service for a user based on the Factom architecture.

In the implementations of the present specification, several blockchain ledger platforms in the market can be specified as candidate blockchain ledger platforms. For example, the courts can select a plurality of blockchain ledger platforms as the candidate blockchain ledger platforms from the blockchain ledger platforms in the market, and establish a cooperation relationship with each candidate blockchain ledger platform. The online case acceptance system of the court can be interconnected with the server(s) of each candidate blockchain ledger platform.

In the implementations of the present specification, the identification device determines, in at least four methods, whether the target electronic evidence has been stored by at least one candidate blockchain ledger platform:
1. Obtain target electronic evidence uploaded by a user; query a candidate blockchain ledger platform to determine whether a transaction stored by the candidate blockchain ledger platform includes the target electronic evidence; in response to that the transaction stored by the candidate blockchain ledger platform includes the target electronic evidence, determine that the target electronic evidence has been stored by the candidate blockchain ledger platform; and in response to that the transaction stored by the candidate blockchain ledger platform does not include the target electronic evidence, determine that the target electronic evidence is not stored by the candidate blockchain ledger platform. The user who uploads the target electronic evidence can be the accusant, the respondent, or another related person of a case.
2. Obtain target electronic evidence uploaded by a user; calculate an evidence hash of the target electronic evidence based on the target electronic evidence; query a candidate blockchain ledger platform based on the evidence hash to determine whether the evidence hash is included in a transaction stored by the candidate blockchain ledger platform; in response to that the evidence hash is included in the transaction stored by the candidate blockchain ledger platform, determine that the target electronic evidence has been stored by the candidate blockchain ledger platform; and in response to that the evidence hash is not included in the transaction stored by the candidate blockchain ledger platform, determine that the target electronic evidence is not stored by the candidate blockchain ledger platform. The user who uploads the target electronic evidence can be the accusant, the respondent, or another related person of a case.
   In methods 1 and 2, the user needs to upload the target electronic evidence to the identification device. If the target electronic evidence is indirectly stored in the form of an evidence hash, the identification device can calculate the evidence hash of the electronic evidence and verify the target electronic evidence through each candidate blockchain ledger platform by using the calculated evidence hash as a clue, so as to determine whether the target electronic evidence is actually stored by at least one candidate blockchain ledger platform. If the target electronic evidence is directly stored, the identification device can directly verify through each candidate blockchain ledger platform whether the target electronic evidence has been added to the blockchain.
3. Obtain a target transaction hash uploaded by a user; query a candidate blockchain ledger platform based on the target transaction hash to determine whether there is a transaction whose transaction hash is the target transaction hash among transactions recorded by the candidate blockchain ledger platform; in response to that there is a transaction whose transaction hash is the target transaction hash among the transactions recorded by the candidate blockchain ledger platform, identify the transaction whose transaction hash is the target transaction hash as a target transaction, determine electronic evidence stored by the target transaction as the target electronic evidence, and determine that the target electronic evidence has been stored by the candidate blockchain ledger platform; and in response to that there is no transaction whose transaction hash is the target transaction hash among the transactions recorded by the candidate blockchain ledger platform, determine that the target electronic evidence is not stored by the candidate blockchain ledger platform.
   The user who uploads the target transaction hash can be the accusant, the respondent, or another related person of a case. The target transaction hash is a transaction hash of the target transaction, and the target transaction is a transaction containing the evidence hash of the target electronic evidence.
   In method 3, the user uploads the target transaction hash to the identification device without needing to upload the target electronic evidence. Based on the target transaction hash, the identification device queries the target transaction corresponding to the target transaction hash through each candidate blockchain ledger platform. If the target transaction cannot be found, the identification device determines that the target transaction hash is invalid, which further indicates that the target electronic evidence is not stored by at least one candidate blockchain ledger platform. If the target transaction is found, the electronic evidence stored by using the target transaction is the target electronic evidence.
   Further, if the target electronic evidence itself is included in the target transaction stored in the blockchain, the target electronic evidence can be extracted directly from the target transaction; if the target transaction stored in the blockchain contains the evidence hash of the target electronic evidence, the evidence hash can be used as a clue to extract the target electronic evidence from another route (*e.g.,* a data warehouse).
4. Obtain the target electronic evidence and a target transaction hash uploaded by a user; query a candidate blockchain ledger platform based on the target transaction hash to determine whether there is a transaction whose transaction hash is the target transaction hash among transactions recorded by the candidate blockchain ledger platform; in response to that there is a transaction whose transaction hash is the target transaction hash among the transactions recorded by the candidate blockchain ledger platform, identify the transaction whose transaction hash is the target transaction hash as a target transaction, determine whether electronic evidence stored by the target transaction is the same as the target electronic evidence, in response to that the electronic evidence stored by the target transaction is the same as the target electronic evidence, determine that the target electronic evidence has been stored by the candidate blockchain ledger platform, and in response to that the electronic evidence stored by the target transaction is not the same as the target electronic evidence, determine that the target electronic evidence is not stored by the candidate blockchain ledger platform; and in response to that there is no transaction whose transaction hash is the target transaction hash among the transactions recorded by the candidate blockchain ledger platform, determine that the target electronic evidence is not stored by the candidate blockchain ledger platform.

In method 4, the user can upload the target electronic evidence and the target transaction hash to the identification device. Herein, as previously described, the target electronic evidence is added to the blockchain in the data structure of the target transaction, which can contain the electronic evidence itself or can contain only the evidence hash of the target electronic evidence. Based on this, in method 4, it is determined whether the electronic evidence stored by using the target transaction is the same as the target electronic evidence. Specifically, the evidence hash of the electronic evidence stored by using the target transaction can be calculated, the evidence hash of the target electronic evidence can be calculated, and the calculated two evidence hashes are compared to determine whether they are consistent. If they are consistent, it can be determined that the target electronic evidence has been stored by the candidate blockchain ledger platform.

In summary, in step S100, the identification device can determine, in a plurality of ways, whether the target electronic evidence has been stored by at least one candidate blockchain ledger platform, and thereby identify the authenticity degree (*i.e.,* the possibility of being authentic) of the target electronic evidence.

If the target electronic evidence is not stored by any candidate blockchain ledger platform, it means that the authenticity degree of the target electronic evidence is unknown, and the target electronic evidence may have been tampered with. If the target electronic evidence has been stored by at least one candidate blockchain ledger platform, it means that the authenticity degree of the target electronic evidence is high and the possibility of being tampered with is low.

S102: Determine a first score as an authenticity reference score corresponding to the target electronic evidence.

S104: Determine a second score as an authenticity reference score corresponding to the target electronic evidence.

In the implementations of the present specification, the concept of the authenticity reference score is introduced to quantify the authenticity degree of the electronic evidence. The higher the authenticity degree of the target electronic evidence identified by the identification device, the higher the authenticity reference score given for the target electronic evidence. Specifically, the authenticity reference score can range from 0 to 100 scores. Assume that the authenticity reference score corresponding to the target electronic evidence is 90, it means that the probability that the identification device considers that the target electronic evidence is authentic and is not tampered with is 90%.

A relatively high authenticity reference score (that is, the first score) is assigned to the target electronic evidence if the target electronic evidence is stored by at least one candidate blockchain ledger platform; and a relatively low authenticity reference score (that is, the second score) is assigned to the target electronic evidence if the target electronic evidence is not stored by any candidate blockchain ledger platform. That is, the first score is greater than the second score.

According to the method shown in FIG. 1, if the target electronic evidence corresponds to a relatively high authenticity reference score, it indicates that the identified target electronic evidence has a relatively high degree of authenticity (possibility of being authentic) and a relatively low possibility of being tampered with. The electronic evidence that has been stored by the blockchain ledger platform often has a tamper-resistance characteristic, and the authenticity reference score corresponding to the electronic evidence is made based on whether the electronic evidence has been stored by the blockchain ledger platform. As such, the authenticity reference score corresponding to the electronic evidence is used as a reference, so the difficulty of the judicial official in examining the authenticity of the electronic evidence can be significantly reduced.

In addition, in the implementations of the present specification, a plurality of categories can be predetermined, and a corresponding scoring rule can be configured for each category of the plurality of categories. Based on the types of cases involved in the electronic evidence, corresponding categories can be configured, for example: 1. network copyright cases - right of distribution; 2. criminal cases - fraud; 3. contract dispute cases - breach of contract.

The categories can also be configured based on different types of evidence, for example: 1. Audiovisual evidence - webpage screenshots; 2. text evidence - Word documents.

Categories can also be configured based on the types of cases involved in the electronic evidence and the types of evidence, for example: 1. (network copyright cases - right of distribution, audiovisual evidence - webpage screenshots); 2. (criminal cases - fraud, text evidence - Word documents).

Therefore, in step S102, the category of the target electronic evidence can be determined as a target category; and the first score can be determined based on a scoring rule corresponding to the target category. In step S104, the category of the target electronic evidence can be determined as a target category; and the second score can be determined based on a scoring rule corresponding to the target category.

The scoring rules for different categories are different, which means that if the same electronic evidence belongs to different categories, the resulting authenticity reference scores can be different. For example, there are categories: 1. network copyright cases - right of distribution; 2. criminal cases - fraud. The scoring rule corresponding to category 1 may be not strict, but the scoring rule corresponding to category 2 may be strict. Assume that the target electronic evidence is a recording and has been stored on a certain candidate blockchain ledger platform. If the recording is classified into category 1, the authenticity reference score obtained for the recording can be 99 scores. If the recording is classified into category 2, the authenticity reference score obtained for the recording can be 80 scores.

Further, a plurality of score intervals corresponding to each category of the plurality of categories can be predetermined, and an authenticity reference level corresponding to each score interval corresponding to the category can be configured. Between two score intervals of the plurality of score intervals, a score interval with a larger left endpoint value (or right endpoint value) corresponds to a higher authenticity reference level. That is, the authenticity reference level corresponding to the score interval with a larger left endpoint value is higher than that corresponding to a score interval with a smaller left endpoint value. Generally, all score intervals do not overlap. For example, assume that the authenticity reference score ranges from 0 to 100 scores, for a certain category, [0, 100] can be divided into several score intervals, [0, 40), [40, 80), and [80, 100], as score intervals corresponding to the category. Then, for each score interval corresponding to the category, a corresponding authenticity reference level is configured. For example, [0, 40) corresponds to an authenticity level 1, [40, 80) corresponds to an authenticity level 2, and [80, 100] corresponds to an authenticity level 3.

Based on this, after the authenticity reference score corresponding to the target electronic evidence is obtained, the evidence category to which the target electronic evidence belongs can be determined as a target evidence category. Then, in score intervals corresponding to the target category, a score interval into which the authenticity reference score corresponding to the target electronic evidence falls is determined as a target score interval. An authenticity reference level corresponding to the target score interval is determined as the authenticity reference level corresponding to the target electronic evidence.

Still further, in the implementations of the present specification, one or more of a scoring rule and a score interval corresponding to a certain category can be adjusted based on the final determination of the authenticity of the electronic evidence in the judicial procedure.

Specifically, an authenticity confidence level corresponding to each electronic evidence belonging to each category is obtained, and the authenticity confidence level corresponding to the electronic evidence is confirmed by the judicial procedure. Electronic evidence whose authenticity reference level and authenticity confidence level are inconsistent is selected as specified electronic evidence from the electronic evidence belonging to the category. In response to that a ratio between the specified electronic evidence and the electronic evidence belonging to the category is greater than a threshold ratio, one or more of a scoring rule and a score interval corresponding to the category are adjusted based on the authenticity confidence level corresponding to each specified electronic evidence, the authenticity reference level corresponding to each specified electronic evidence that is obtained based on the adjusted one or more of the scoring rule and the score interval corresponding to the category being consistent with the authenticity confidence level corresponding to the specified electronic evidence.

For example, after the online case acceptance system runs for a period of time, the authenticity of 100 pieces of electronic evidence belonging to category 1 is successively identified, and authenticity reference levels corresponding to the 100 pieces of electronic evidence are obtained. After the 100 pieces of electronic evidence are successively submitted to the court, the court determines, through the judicial procedure, authenticity confidence levels corresponding to the 100 pieces of electronic evidence. There are 25 pieces of electronic evidence (specified electronic evidence) whose authenticity reference levels are inconsistent with their authenticity confidence levels. The ratio is 25% and is greater than 20% (threshold ratio). Then, the online case acceptance system can adjust the one or more of the scoring rule and the score interval corresponding to category 1 accordingly, so the authenticity reference level corresponding to each specified electronic evidence that is obtained based on the adjusted one or more of the scoring rule and the score interval is consistent with the authenticity confidence level corresponding to the specified electronic evidence.

In addition, in the implementations of the present specification, in response to that it is determined that the target electronic evidence is not stored by any candidate blockchain ledger platform, whether the target electronic evidence is stored by a non-candidate blockchain ledger platform specified by a user can be further determined. In response to that the target electronic evidence is stored by the non-candidate blockchain ledger platform specified by the user, a third score corresponding to the target electronic evidence is determined as the authenticity reference score corresponding to the target electronic evidence. In response to that the target electronic evidence is not stored by the non-candidate blockchain ledger platform specified by the user, a second score corresponding to the target electronic evidence is determined as the authenticity reference score corresponding to the target electronic evidence. The third score is greater than the second score, and the third score is less than the first score.

That is, if the target electronic evidence is not stored by any candidate blockchain ledger platform, but is stored by a non-candidate blockchain ledger platform (not connected to the identification device in advance), the authenticity of the target electronic evidence can be supported to some extent.

Further, in step S104, the specified score can be determined as the second score, and in response to determining that a specified condition is met, a score greater than the specified score can be determined as the second score.

The determining that the specified condition is met specifically includes: determining, as similar electronic evidence corresponding to the target electronic evidence, the electronic evidence most similar to the target electronic evidence from electronic evidence stored by each candidate blockchain ledger platform; calculating a similarity score between the target electronic evidence and the similar electronic evidence as a similarity score corresponding to the target electronic evidence, a greater similarity score corresponding to the target electronic evidence indicating that the target electronic evidence is more similar to the similar electronic evidence; selecting a similarity score that is greatest among similarity scores corresponding to the target electronic evidence as a greatest similarity score; and in response to that the greatest similarity score is greater than a threshold similarity score, determining that the specified condition is met.

It should be noted herein that, in practice, sometimes the version of the electronic evidence uploaded by the user to the blockchain ledger platform is the original version (referred to as the original electronic evidence). Then, the user provides the latest version (the latest electronic evidence) of the electronic evidence to the identification device. The original electronic evidence is often similar to the latest electronic evidence, but with a certain difference, which may cause the identification device to determine that the latest electronic evidence is not stored by any candidate blockchain ledger platform in verifying the authenticity of the latest electronic evidence. To avoid this scenario, if the target electronic evidence is not stored by any blockchain ledger platform, but is similar to a certain electronic evidence that has been stored, the authenticity reference score corresponding to the target electronic evidence can be determined as a higher score (but should be smaller than the first score).

FIG. 2 shows a method for identifying two parties' evidence based on a blockchain ledger according to implementations of the present specification, and the method includes the following steps:
S200: Receive case event information uploaded by an accusant of a case.
S202: Determine an authenticity reference score corresponding to evidence of the accusant ("accusation evidence") through a target procedure.
S204: Send the case event information and the accusation evidence to a respondent of the case.
S206: In response to that it is determined that there is evidence provided by the respondent ("responding evidence"), determine an authenticity reference score corresponding to the responding evidence through the target procedure.

The method can be executed by the identification device described above, or can be specifically performed by the online case acceptance system described above.

As is well known, in the judicial field, evidence is generally presented in respect of a case event and is used for supporting or falsifying the occurrence of the case event.

In the implementations of the present specification, the accusant can be a plaintiff in a civil case, a prosecutor in a criminal case, the victim, or a relative of the victim. The respondent can be a defendant in a civil case, a criminal suspect in a criminal case, or a relative of the criminal suspect.

In the method shown in FIG. 2, the accusation evidence is electronic evidence presented by the accusant for supporting the case event information, and the responding evidence is electronic evidence presented by the respondent for falsifying the case event information.

In the method shown in FIG. 2, the target procedure is actually the method flow shown in FIG. 1. For the description of the target procedure, refer to the above description, and details are omitted herein for simplicity.

In the method shown in FIG. 2, for a certain case event that the accusant of the case claims to be real, the accusant's accusation evidence for supporting the case event is identified through the target procedure; in addition, the respondent's responding evidence for falsifying the case event is identified through the target procedure. The target procedure is: identifying target electronic evidence (accusation evidence or responding evidence), providing a relatively high authenticity reference score for the target electronic evidence when it is determined that the target electronic evidence has been stored by at least one candidate blockchain ledger platform, and providing a relatively low authenticity reference score for the target electronic evidence when it is determined that the target electronic evidence is not stored by the at least one candidate blockchain ledger platform. If the target electronic evidence corresponds to a relatively high authenticity reference score, it indicates that the identified target electronic evidence has a relatively high degree of authenticity (possibility of being authentic) and a relatively low possibility of being tampered with. The electronic evidence that has been stored by the blockchain ledger platform often has a tamper-resistance characteristic, and the authenticity reference score corresponding to the electronic evidence is made based on whether the electronic evidence has been stored by the blockchain ledger platform. As such, the authenticity reference score corresponding to the electronic evidence is used as a reference, so the difficulty of the judicial official in examining the authenticity of the electronic evidence can be significantly reduced.

In the method shown in FIG. 2, the authenticity reference score corresponding to the accusation evidence can be corrected based on the presence or absence of the responding evidence and the authenticity reference score corresponding to the responding evidence.

Specifically, in response to that it is determined that there is no responding evidence, the authenticity reference score corresponding to the accusation evidence can be increased. Certainly, when the authenticity reference score corresponding to the accusation evidence is already the full score, it is in fact impossible to continue to increase the score. Therefore, in practice, in response to that it is determined that there is no responding evidence, and the authenticity reference score corresponding to the accusation evidence does not reach the full score, the authenticity reference score corresponding to the accusation evidence is increased.

It should be noted that if the respondent does not provide the electronic evidence for falsifying the case event information, it means that the respondent is likely to tacitly admit that the case event information is true. In this case, increasing the authenticity reference score corresponding to the accusation evidence can further reduce the difficulty of the judicial official in examining the authenticity of the electronic evidence.

Further, in response to that it is determined that there is responding evidence, it can be determined whether the authenticity reference score corresponding to the responding evidence meets a predetermined correction triggering condition, and in response to that the authenticity reference score corresponding to the responding evidence meets the predetermined correction triggering condition, the authenticity reference score corresponding to the accusation evidence is corrected.

Further, in response to that the authenticity reference score corresponding to the responding evidence is greater than a first specified threshold score, as the predetermined correction triggering condition, the authenticity reference score corresponding to the accusation evidence can be decreased. In response to that the authenticity reference score corresponding to the responding evidence is less than a second specified threshold score, as the predetermined correction triggering condition, the authenticity reference score corresponding to the accusation evidence can be increased. The first specified threshold score is greater than the second specified threshold score.

That is, when the authenticity reference score corresponding to the responding evidence is very high, it is equivalent to indirectly weakening the authenticity of the accusation evidence, and therefore, the authenticity reference score corresponding to the accusation evidence can be decreased. Specifically, the authenticity reference score corresponding to the accusation evidence can be decreased so the authenticity reference level corresponding to the accusation evidence is lowered.

That is, when the authenticity reference score corresponding to the responding evidence is too small, it is equivalent to indirectly enhancing the authenticity of the accusation evidence, and therefore, the authenticity reference score corresponding to the accusation evidence can be increased. Specifically, the authenticity reference score corresponding to the accusation evidence can be increased so the authenticity reference level corresponding to the accusation evidence is raised.

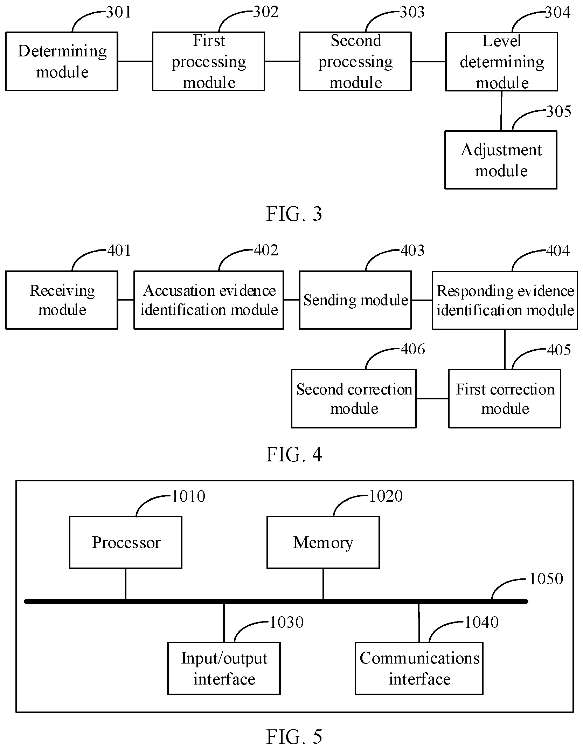

In accordance to the method for identifying evidence authenticity based on a blockchain ledger shown in FIG. 1, implementations of the present specification further correspondingly provides an apparatus for identifying evidence authenticity based on a blockchain ledger. As shown in FIG. 3, the apparatus includes: a determining module 301, configured to determine whether target electronic evidence has been stored by at least one candidate blockchain ledger platform; a first processing module 302, configured to: determine a first score as an authenticity reference score corresponding to the target electronic evidence if the determining module 301 determines that the target electronic evidence has been stored by at least one candidate blockchain ledger platform; and a second processing module 303, configured to determine a second score as an authenticity reference score corresponding to the target electronic evidence if the determining module 301 determines that the target electronic evidence is not stored by at least one candidate blockchain ledger platform; where the authenticity reference score corresponding to the target electronic evidence is positively related to an authenticity degree of the identified target electronic evidence, and the first score is greater than the second score.

The determining module 301 obtains target electronic evidence uploaded by a user; calculates an evidence hash of the target electronic evidence based on the target electronic evidence; queries a candidate blockchain ledger platform based on the evidence hash to determine whether the evidence hash is included in a transaction stored by the candidate blockchain ledger platform; in response to that the evidence hash is included in the transaction stored by the candidate blockchain ledger platform, determines that the target electronic evidence has been stored by the candidate blockchain ledger platform; and in response to that the evidence hash is not included in the transaction stored by the candidate blockchain ledger platform, determines that the target electronic evidence is not stored by the candidate blockchain ledger platform.

The determining module 301 obtains a target transaction hash uploaded by a user; queries a candidate blockchain ledger platform based on the target transaction hash to determine whether there is a transaction whose transaction hash is the target transaction hash among transactions recorded by the candidate blockchain ledger platform; in response to that there is a transaction whose transaction hash is the target transaction hash among the transactions recorded by the candidate blockchain ledger platform, identifies the transaction whose transaction hash is the target transaction hash as a target transaction, determines electronic evidence stored by the target transaction as the target electronic evidence, and determines that the target electronic evidence has been stored by the candidate blockchain ledger platform; and in response to that there is no transaction whose transaction hash is the target transaction hash among the transactions recorded by the candidate blockchain ledger platform, determines that the target electronic evidence is not stored by the candidate blockchain ledger platform.

The determining module 301 obtains the target electronic evidence and a target transaction hash uploaded by a user; queries a candidate blockchain ledger platform based on the target transaction hash to determine whether there is a transaction whose transaction hash is the target transaction hash among transactions recorded by the candidate blockchain ledger platform; in response to that there is a transaction whose transaction hash is the target transaction hash among the transactions recorded by the candidate blockchain ledger platform, identifies the transaction whose transaction hash is the target transaction hash as a target transaction, determines whether electronic evidence stored by the target transaction is the same as the target electronic evidence, in response to that the electronic evidence stored by the target transaction is the same as the target electronic evidence, determines that the target electronic evidence has been stored by the candidate blockchain ledger platform, and in response to that the electronic evidence stored by the target transaction is not the same as the target electronic evidence, determines that the target electronic evidence is not stored by the candidate blockchain ledger platform; and in response to that there is no transaction whose transaction hash is the target transaction hash among the transactions recorded by the candidate blockchain ledger platform, determines that the target electronic evidence is not stored by the candidate blockchain ledger platform.

A plurality of categories are predetermined, and a corresponding scoring rule is configured for each category of the plurality of categories; the first processing module 302 determines a category of the plurality of categories that the target electronic evidence belongs to as a target category, and determines the first score or the second score based on a scoring rule corresponding to the target category; and the second processing module 303 determines a category of the plurality of categories that the target electronic evidence belongs to as a target category, and determines the second score based on a scoring rule corresponding to the target category.

A plurality of score intervals corresponding to each category of the plurality of categories are predetermined, and an authenticity reference level corresponding to each score interval corresponding to the category is configured; between two score intervals of the plurality of score intervals, a score interval with a larger left endpoint value corresponds to a higher authenticity reference level.

The apparatus further includes: a level determining module 304, configured to determine, from the plurality of score intervals corresponding to the target category, a score interval into which the authenticity reference score corresponding to the target electronic evidence falls as a target score interval; and determines an authenticity reference level corresponding to the target score interval as an authenticity reference level corresponding to the target electronic evidence, the authenticity reference level corresponding to each specified electronic evidence that is obtained based on the adjusted one or more of the scoring rule and the score interval corresponding to the category being consistent with the authenticity confidence level corresponding to the specified electronic evidence.

The apparatus further includes: an adjustment module 305, configured to: for each category, obtain an authenticity confidence level corresponding to each electronic evidence belonging to the category, the authenticity confidence level corresponding to the electronic evidence being confirmed by a judicial procedure; select, among the electronic evidence belonging to the category, electronic evidence whose authenticity reference level and authenticity confidence level are inconsistent as identified electronic evidence; and in response to that a ratio between the specified electronic evidence and the electronic evidence belonging to the category is greater than a threshold ratio, adjust one or more of a scoring rule and a score interval corresponding to the category based on the authenticity confidence level corresponding to each specified electronic evidence.

The second processing module 303 determines whether the target electronic evidence is stored by a non-candidate blockchain ledger platform specified by a user; in response to that the target electronic evidence is stored by the non-candidate blockchain ledger platform specified by the user, determines a third score corresponding to the target electronic evidence as the authenticity reference score corresponding to the target electronic evidence; and in response to that the target electronic evidence is not stored by the non-candidate blockchain ledger platform specified by the user, determines a second score corresponding to the target electronic evidence as the authenticity reference score corresponding to the target electronic evidence; where the third score is greater than the second score, and the third score is less than the first score.

The second processing module 303 determines a specified score as the second score; and in response to determining that a specified condition is met, determines a score greater than the specified score as the second score; the determining that the specified condition is met specifically includes: determining, as similar electronic evidence corresponding to the target electronic evidence, the electronic evidence most similar to the target electronic evidence from electronic evidence stored by each candidate blockchain ledger platform; calculating a similarity score between the target electronic evidence and the similar electronic evidence as a similarity score corresponding to the target electronic evidence, a greater similarity score corresponding to the target electronic evidence indicating that the target electronic evidence is more similar to the similar electronic evidence; selecting a similarity score that is greatest among similarity scores corresponding to the target electronic evidence as a greatest similarity score; and in response to that the greatest similarity score is greater than a threshold similarity score, determining that the specified condition is met.

Based on the method for identifying authenticity of two parties' evidence based on a blockchain ledger shown in FIG. 2, implementations of the present specification further correspondingly provides an apparatus for identifying authenticity of two parties' evidence based on a blockchain ledger. As shown in FIG. 4, the apparatus includes: a receiving module 401, configured to receive case event information uploaded by an accusant of a case; an accusation evidence identification module 402, configured to determine an authenticity reference score corresponding to accusation evidence through a target procedure, the accusation evidence being electronic evidence presented by the accusant to support the case event information; a sending module 403, configured to send the case event information and the accusation evidence to a respondent of the case; and a responding evidence identification module 404, configured to: in response to that it is determined that there is responding evidence, determine an authenticity reference score corresponding to the responding evidence through the target procedure, the responding evidence being electronic evidence presented by the respondent to falsify the case event information.

The target procedure includes: determining whether target electronic evidence has been stored by at least one candidate blockchain ledger platform, the target electronic evidence being the accusation evidence or the responding evidence; determining a first score as an authenticity reference score corresponding to the target electronic evidence in response to that it is determined that the target electronic evidence has been stored by the at least one candidate blockchain ledger platform; or determining a second score as an authenticity reference score corresponding to the target electronic evidence in response to that it is determined that the target electronic evidence is not stored by the at least one candidate blockchain ledger platform; where the authenticity reference score corresponding to the target electronic evidence is positively related to an authenticity degree of the identified target electronic evidence, and the first score is greater than the second score.

The determining whether the target electronic evidence has been stored by the at least one candidate blockchain ledger platform specifically includes: obtaining the target electronic evidence uploaded by a user; calculating an evidence hash of the target electronic evidence based on the target electronic evidence; querying a candidate blockchain ledger platform based on the evidence hash to determine whether the evidence hash is included in a transaction stored by the candidate blockchain ledger platform; in response to that the evidence hash is included in the transaction stored by the candidate blockchain ledger platform, determining that the target electronic evidence has been stored by the candidate blockchain ledger platform; and in response to that the evidence hash is not included in the transaction stored by the candidate blockchain ledger platform, determining that the target electronic evidence is not stored by the candidate blockchain ledger platform.

The determining whether the target electronic evidence has been stored by the at least one candidate blockchain ledger platform specifically includes: obtaining a target transaction hash uploaded by a user; querying a candidate blockchain ledger platform based on the target transaction hash to determine whether there is a transaction whose transaction hash is the target transaction hash among transactions recorded by the candidate blockchain ledger platform; in response to that there is a transaction whose transaction hash is the target transaction hash among the transactions recorded by the candidate blockchain ledger platform, identifying the transaction whose transaction hash is the target transaction hash as a target transaction, determining electronic evidence stored by the target transaction as the target electronic evidence, and determining that the target electronic evidence has been stored by the candidate blockchain ledger platform; and in response to that there is no transaction whose transaction hash is the target transaction hash among the transactions recorded by the candidate blockchain ledger platform, determining that the target electronic evidence is not stored by the candidate blockchain ledger platform.

The determining whether the target electronic evidence has been stored by the at least one candidate blockchain ledger platform specifically includes: obtaining the target electronic evidence and a target transaction hash uploaded by a user; querying a candidate blockchain ledger platform based on the target transaction hash to determine whether there is a transaction whose transaction hash is the target transaction hash among transactions recorded by the candidate blockchain ledger platform; in response to that there is a transaction whose transaction hash is the target transaction hash among the transactions recorded by the candidate blockchain ledger platform, identifying the transaction whose transaction hash is the target transaction hash as a target transaction, determining whether electronic evidence stored by the target transaction is the same as the target electronic evidence, in response to that the electronic evidence stored by the target transaction is the same as the target electronic evidence, determining that the target electronic evidence has been stored by the candidate blockchain ledger platform, and in response to that the electronic evidence stored by the target transaction is not the same as the target electronic evidence, determining that the target electronic evidence is not stored by the candidate blockchain ledger platform; and in response to that there is no transaction whose transaction hash is the target transaction hash among the transactions recorded by the candidate blockchain ledger platform, determining that the target electronic evidence is not stored by the candidate blockchain ledger platform.

A plurality of categories are predetermined, and a corresponding scoring rule is configured for each category of the plurality of categories; the determining the first score or the second score specifically includes: determining a category of the plurality of categories that the target electronic evidence belongs to as a target category; and determining the first score or the second score based on a scoring rule corresponding to the target category.

A plurality of score intervals corresponding to each category of the plurality of categories are predetermined, and an authenticity reference level corresponding to each score interval corresponding to the category is configured; between two score intervals of the plurality of score intervals, a score interval with a larger left endpoint value corresponds to a higher authenticity reference level.

The target procedure further includes: determining, from the plurality of score intervals corresponding to the target category, a score interval into which the authenticity reference score corresponding to the target electronic evidence falls as a target score interval; and determining an authenticity reference level corresponding to the target score interval as an authenticity reference level corresponding to the target electronic evidence.

The target procedure further includes: for a category of the plurality of categories, obtaining an authenticity confidence level corresponding to each electronic evidence belonging to the category, the authenticity confidence level corresponding to the electronic evidence being confirmed by a judicial procedure; selecting, among the electronic evidence belonging to the category, electronic evidence whose authenticity reference level and authenticity confidence level are inconsistent as identified electronic evidence; and in response to that a ratio between the specified electronic evidence and the electronic evidence belonging to the category is greater than a threshold ratio, adjusting one or more of a scoring rule and a score interval corresponding to the category based on the authenticity confidence level corresponding to each specified electronic evidence, the authenticity reference level corresponding to each specified electronic evidence that is obtained based on the adjusted one or more of the scoring rule and the score interval corresponding to the category being consistent with the authenticity confidence level corresponding to the specified electronic evidence.

The determining the second score as the authenticity reference score corresponding to the target electronic evidence specifically includes: determining whether the target electronic evidence is stored by a non-candidate blockchain ledger platform specified by a user; in response to that the target electronic evidence is stored by the non-candidate blockchain ledger platform specified by the user, determining a third score corresponding to the target electronic evidence as the authenticity reference score corresponding to the target electronic evidence; and in response to that the target electronic evidence is not stored by the non-candidate blockchain ledger platform specified by the user, determining a second score corresponding to the target electronic evidence as the authenticity reference score corresponding to the target electronic evidence.

The third score is greater than the second score, and the third score is less than the first score.

The determining the second score specifically includes: determining a specified score as the second score; and in response to determining that a specified condition is met, determining a score greater than the specified score as the second score; and the determining that the specified condition is met specifically includes: determining, as similar electronic evidence corresponding to the target electronic evidence, the electronic evidence most similar to the target electronic evidence from electronic evidence stored by each candidate blockchain ledger platform; calculating a similarity score between the target electronic evidence and the similar electronic evidence as a similarity score corresponding to the target electronic evidence, a greater similarity score corresponding to the target electronic evidence indicating that the target electronic evidence is more similar to the similar electronic evidence; selecting a similarity score that is greatest among similarity scores corresponding to the target electronic evidence as a greatest similarity score; and in response to that the greatest similarity score is greater than a threshold similarity score, determining that the specified condition is met.

The apparatus further includes: a first correction module 405, configured to: in response to that it is determined that there is no responding evidence, increase the authenticity reference score corresponding to the accusation evidence.

The apparatus further includes: a second correction module 406, configured to: in response to that the authenticity reference score corresponding to the responding evidence meets a predetermined correction triggering condition, correct the authenticity reference score corresponding to the accusation evidence.

The second correction module 406 is configured to: in response to that the authenticity reference score corresponding to the responding evidence is greater than a first specified threshold score, as the predetermined correction triggering condition, decrease the authenticity reference score corresponding to the accusation evidence; and in response to that the authenticity reference score corresponding to the responding evidence is less than a second specified threshold score, as the predetermined correction triggering condition, increase the authenticity reference score corresponding to the accusation evidence, where the first specified threshold score is greater than the second specified threshold score.

Implementations of the present specification further provides a computer device. The computer device includes at least a memory, a processor, and a computer program that is stored in the memory and that can run on the processor. When executing the program, the processor implements the functions of the methods in one or more of FIG. 1 and FIG. 2.

FIG. 5 is a more detailed schematic diagram illustrating a hardware structure of a computing device according to implementations of the present specification. The device can include a processor 1010, a memory 1020, an input/output interface 1030, a communications interface 1040, and a bus 1050. The processor 1010, the memory 1020, the input/output interface 1030, and the communications interface 1040 are communicatively connected to each other inside the device by using the bus 1050.

The processor 1010 can be implemented by using a general central processing unit (CPU), a microprocessor, an application-specific integrated circuit (ASIC), one or more integrated circuits, etc., and is configured to execute a related program, to implement the technical solutions provided in the implementations of the present specification.

The memory 1020 can be implemented by using a read-only memory (ROM), a random access memory (RAM), a static storage device, a dynamic storage device, etc. The memory 1020 can store an operating system and another application program. When the technical solutions provided in the implementations of the present specification are implemented by using software or firmware, related program code is stored in the memory 1020, and is invoked and executed by the processor 1010.

The input/output interface 1030 is configured to be connected to an input/output module, to input or output information. The input/output module (not shown in the figure) can be used as a component and configured in the device, or can be externally connected to the device to provide a corresponding function. The input device can include a keyboard, a mouse, a touchscreen, a microphone, various sensors, etc. The output device can include a monitor, a speaker, a vibrator, an indicator, etc.

The communications interface 1040 is configured to be connected to a communications module (not shown in the figure), to implement a communication interaction between the device and another device. The communications module can perform communication in a wired method (for example, USB or a network cable), or can perform communication in a wireless method (for example, a mobile network, Wi-Fi, or Bluetooth).

The bus 1050 includes one channel, used to transmit information between components (for example, the processor 1010, the memory 1020, the input/output interface 1030, and the communications interface 1040) of the device.

It should be noted that although only the processor 1010, the memory 1020, the input/output interface 1030, the communications interface 1040, and the bus 1050 of the device are shown, during specific implementations, the device can further include other components needed for implementing normal running. In addition, a person skilled in the art can understand that the device can include only components necessary for implementing the solutions in the implementations of the present specification, but does not necessarily include all components shown in the figure.

Implementations of the present specification further provides a computer readable storage medium. The computer readable storage medium stores a computer program. When executing the program, a processor implements the functions of the methods in one or more of FIG. 1 and FIG. 2.

The computer readable medium includes persistent, non-persistent, movable, and unmovable media that can store information by using any method or technology. The information can be a computer readable instruction, a data structure, a program module, or other data. Examples of the computer storage medium include but are not limited to a phase change random access memory (PRAM), a static random access memory (SRAM), a dynamic random access memory (DRAM), another type of RAM, a ROM, an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, another magnetic storage device, or any other non-transmission medium. The computer storage medium can be used to store information accessible by a computing device. Based on the definition in the present specification, the computer readable medium does not include transitory media such as a modulated data signal and carrier.

It can be understood from the descriptions of the implementations that, a person skilled in the art can clearly understand that the implementations of the present specification can be implemented by using software and a necessary general hardware platform. Based on such an understanding, the technical solutions in the implementations of the present specification essentially or the part contributing to the existing technology can be implemented in a form of a software product. The computer software product can be stored in a storage medium, such as a ROM/RAM, a magnetic disk, or an optical disc, and includes several instructions for instructing a computer device (which can be a personal computer, a server, a network device, etc.) to execute the method described in the implementations of the present specification or in some parts of the implementations of the present specification.

The system, method, module, or unit illustrated in the previous implementations can be implemented by using a computer chip or an entity, or can be implemented by using a product having a certain function. A typical implementations device is a computer in the form of a personal computer, a laptop computer, a cellular phone, a camera phone, a smart phone, a personal digital assistant, a media player, a navigation device, an e-mail transceiver, a game console, a tablet computer, a wearable device, or any combination of at least two of these devices.

The implementations of the present specification are described in a progressive method. For same or similar parts of the implementations, references can be made to the implementations. Each implementations focuses on a difference from other implementations. Particularly, the apparatus and device implementations are similar to the method implementations, and therefore are described briefly. For related parts, references can be made to the descriptions in the method implementations. The method implementations described above is merely an example. The modules described as separate parts can or cannot be physically separate. During implementations of the solutions in the implementations of the present application, functions of the modules can be implemented in one or more pieces of software and hardware. Some or all of the modules can be selected based on an actual need to implement the solutions in the implementations. A person of ordinary skill in the art can understand and implement the implementations of the present application without creative efforts.

The previous descriptions are merely specific implementations of the implementations of the present application. It should be noted that a person of ordinary skill in the art can further make several improvements or polishing without departing from the principles of the implementations of the present specification, and the improvements or polishing shall fall within the protection scope of the implementations of the present specification.

## Claims

1. A method for determining authenticity of two parties' evidence based on a blockchain ledger, comprising:
receiving case event information uploaded by an accusant of a case;
determining an authenticity reference score corresponding to accusation evidence through a target procedure, the accusation evidence being electronic evidence presented by the accusant to support the case event information;
sending the case event information and the accusation evidence to a respondent of the case; and
in response to that it is determined that there is responding evidence, determining an authenticity reference score corresponding to the responding evidence through the target procedure, the responding evidence being electronic evidence presented by the respondent to falsify the case event information;
wherein the target procedure includes:
determining whether target electronic evidence has been stored by at least one candidate blockchain ledger platform, the target electronic evidence being the accusation evidence or the responding evidence;
determining a first score as an authenticity reference score corresponding to the target electronic evidence in response to that it is determined that the target electronic evidence has been stored by the at least one candidate blockchain ledger platform; and
determining a second score as an authenticity reference score corresponding to the target electronic evidence in response to that it is determined that the target electronic evidence is not stored by the at least one candidate blockchain ledger platform;
wherein the authenticity reference score corresponding to the target electronic evidence is positively related to an authenticity degree of the identified target electronic evidence, and the first score is greater than the second score.

2. The method according to claim 1, wherein the determining whether the target electronic evidence has been stored by the at least one candidate blockchain ledger platform specifically includes:
obtaining the target electronic evidence uploaded by a user;
calculating an evidence hash of the target electronic evidence based on the target electronic evidence;
querying a candidate blockchain ledger platform based on the evidence hash to determine whether the evidence hash is included in a transaction stored by the candidate blockchain ledger platform;
in response to that the evidence hash is included in the transaction stored by the candidate blockchain ledger platform, determining that the target electronic evidence has been stored by the candidate blockchain ledger platform; and
in response to that the evidence hash is not included in the transaction stored by the candidate blockchain ledger platform, determining that the target electronic evidence is not stored by the candidate blockchain ledger platform.

3. The method according to claim 1, wherein the determining whether the target electronic evidence has been stored by the at least one candidate blockchain ledger platform specifically includes:
obtaining a target transaction hash uploaded by a user;
querying a candidate blockchain ledger platform based on the target transaction hash to determine, among transactions recorded by the candidate blockchain ledger platform, whether there is a transaction whose transaction hash is the target transaction hash;
in response to that there is a transaction whose transaction hash is the target transaction hash among the transactions recorded by the candidate blockchain ledger platform, identifying the transaction whose transaction hash is the target transaction hash as a target transaction, determining electronic evidence stored by the target transaction as the target electronic evidence, and determining that the target electronic evidence has been stored by the candidate blockchain ledger platform; and
in response to that there is no transaction whose transaction hash is the target transaction hash among the transactions recorded by the candidate blockchain ledger platform, determining that the target electronic evidence is not stored by the candidate blockchain ledger platform.

4. The method according to claim 1, wherein the determining whether the target electronic evidence has been stored by the at least one candidate blockchain ledger platform specifically includes:
obtaining the target electronic evidence and a target transaction hash uploaded by a user;
querying a candidate blockchain ledger platform based on the target transaction hash to determine, among transactions recorded by the candidate blockchain ledger platform, whether there is a transaction whose transaction hash is the target transaction hash;
in response to there is a transaction whose transaction hash is the target transaction hash among the transactions recorded by the candidate blockchain ledger platform, identifying the transaction whose transaction hash is the target transaction hash as a target transaction, determining whether electronic evidence stored by the target transaction is a same as the target electronic evidence, in response to that the electronic evidence stored by the target transaction is the same as the target electronic evidence, determining that the target electronic evidence has been stored by the candidate blockchain ledger platform, and in response to that the electronic evidence stored by the target transaction is not the same as the target electronic evidence, determining that the target electronic evidence is not stored by the candidate blockchain ledger platform; and
in response to there is no transaction whose transaction hash is the target transaction hash among the transactions recorded by the candidate blockchain ledger platform, determining that the target electronic evidence is not stored by the candidate blockchain ledger platform.

5. The method according to claim 1, comprising predetermining a plurality of categories, and configuring a scoring rule corresponding to each category of the plurality of categories; and
wherein the determining the first score or the second score specifically includes:
determining a category of the plurality of categories that the target electronic evidence belongs to as a target category; and
determining the first score or the second score based on a scoring rule corresponding to the target category.

6. The method according to claim 5, comprising:
pre-determining a plurality of score intervals corresponding to each category of the plurality of categories, and configuring an authenticity reference level corresponding to each score interval corresponding to the category, between two score intervals of the plurality of score intervals, a score interval with a larger left endpoint value corresponding to a higher authenticity reference level;
determining, from the plurality of score intervals corresponding to the target category, a score interval into which the authenticity reference score corresponding to the target electronic evidence falls as a target score interval; and
determining an authenticity reference level corresponding to the target score interval as an authenticity reference level corresponding to the target electronic evidence.

7. The method according to claim 6, further comprising:
for a category of the plurality of categories,
obtaining an authenticity confidence level corresponding to each electronic evidence belonging to the category, the authenticity confidence level corresponding to the electronic evidence being confirmed by a judicial procedure;
selecting, among the electronic evidence belonging to the category, electronic evidence whose authenticity reference level and authenticity confidence level are inconsistent as identified electronic evidence; and
in response to that a ratio between the specified electronic evidence and the electronic evidence belonging to the category is greater than a threshold ratio, adjusting one or more of a scoring rule and a score interval corresponding to the category based on the authenticity confidence level corresponding to each specified electronic evidence, the authenticity reference level corresponding to each specified electronic evidence that is obtained based on adjusted one or more of the scoring rule and the score interval corresponding to the category being consistent with the authenticity confidence level corresponding to the specified electronic evidence.

8. The method according to claim 1, wherein the determining the second score as the authenticity reference score corresponding to the target electronic evidence specifically includes:
determining whether the target electronic evidence is stored by a non-candidate blockchain ledger platform specified by a user;
in response to that the target electronic evidence is stored by the non-candidate blockchain ledger platform specified by the user, determining a third score corresponding to the target electronic evidence as the authenticity reference score corresponding to the target electronic evidence; and
in response to that the target electronic evidence is not stored by the non-candidate blockchain ledger platform specified by the user, determining the second score corresponding to the target electronic evidence as the authenticity reference score corresponding to the target electronic evidence;
wherein the third score is greater than the second score, and the third score is less than the first score.

9. The method according to claim 1 or 8, wherein the determining the second score specifically includes:
determining a specified score as the second score;
or
in response to determining that a specified condition is met, determining a score greater than the specified score as the second score; and
wherein the determining that the specified condition is met specifically includes:
determining electronic evidence most similar to the target electronic evidence among electronic evidence stored by each candidate blockchain ledger platform as similar electronic evidence corresponding to the target electronic evidence;
calculating a similarity score between the target electronic evidence and the similar electronic evidence as a similarity score corresponding to the target electronic evidence, a greater similarity score corresponding to the target electronic evidence indicating that the target electronic evidence is more similar to the similar electronic evidence;
selecting a similarity score that is greatest among similarity scores corresponding to the target electronic evidence as a greatest similarity score; and
in response to that the greatest similarity score is greater than a threshold similarity score, determining that the specified condition is met.

10. The method according to claim 1, further comprising:
in response to it is determined that there is no responding evidence, increasing the authenticity reference score corresponding to the accusation evidence.

11. The method according to claim 1, further comprising:
in response to that the authenticity reference score corresponding to the responding evidence meets a predetermined correction triggering condition, correcting the authenticity reference score corresponding to the accusation evidence.

12. The method according to claim 11, wherein the correcting the authenticity reference score corresponding to the accusation evidence specifically includes:
in response to that the authenticity reference score corresponding to the responding evidence is greater than a first specified threshold score, as the predetermined correction triggering condition, decreasing the authenticity reference score corresponding to the accusation evidence; or
in response to that the authenticity reference score corresponding to the responding evidence is less than a second specified threshold score, as the predetermined correction triggering condition, increasing the authenticity reference score corresponding to the accusation evidence;
wherein the first specified threshold score is greater than the second specified threshold score.

13. An apparatus for determining authenticity of two parties' evidence based on a blockchain ledger, comprising:
a receiving module, configured to receive case event information uploaded by an accusant of a case;
an accusation evidence identification module, configured to determine an authenticity reference score corresponding to accusation evidence through a target procedure, the accusation evidence being electronic evidence presented by the accusant to support the case event information;
a sending module, configured to send the case event information and the accusation evidence to a respondent of the case; and
a responding evidence identification module, configured to: in response to that it is determined that there is responding evidence, determine an authenticity reference score corresponding to the responding evidence through the target procedure, the responding evidence being electronic evidence presented by the respondent to falsify the case event information;
wherein the target procedure includes:
determining whether target electronic evidence has been stored by at least one candidate blockchain ledger platform, the target electronic evidence being the accusation evidence or the responding evidence;
determining a first score as an authenticity reference score corresponding to the target electronic evidence in response to that it is determined that the target electronic evidence has been stored by the at least one candidate blockchain ledger platform; or
determining a second score as an authenticity reference score corresponding to the target electronic evidence in response to that it is determined that the target electronic evidence is not stored by the at least one candidate blockchain ledger platform;
wherein the authenticity reference score corresponding to the target electronic evidence is positively related to an authenticity degree of the identified target electronic evidence, and the first score is greater than the second score.

14. The apparatus according to claim 13, wherein the determining whether the target electronic evidence has been stored by the at least one candidate blockchain ledger platform specifically includes:
obtaining the target electronic evidence uploaded by a user;
calculating an evidence hash of the target electronic evidence based on the target electronic evidence;
querying a candidate blockchain ledger platform based on the evidence hash to determine whether the evidence hash is included in a transaction stored by the candidate blockchain ledger platform;
in response to that the evidence hash is included in the transaction stored by the candidate blockchain ledger platform, determining that the target electronic evidence has been stored by the candidate blockchain ledger platform; and
in response to that the evidence hash is not included in the transaction stored by the candidate blockchain ledger platform, determining that the target electronic evidence is not stored by the candidate blockchain ledger platform.

15. The apparatus according to claim 13, wherein the determining whether the target electronic evidence has been stored by the at least one candidate blockchain ledger platform specifically includes:
obtaining a target transaction hash uploaded by a user;
querying a candidate blockchain ledger platform based on the target transaction hash to determine, among transactions recorded by the candidate blockchain ledger platform, whether there is a transaction whose transaction hash is the target transaction hash;
in response to that there is a transaction whose transaction hash is the target transaction hash among the transactions recorded by the candidate blockchain ledger platform, identifying the transaction whose transaction hash is the target transaction hash as a target transaction, determining electronic evidence stored by the target transaction as the target electronic evidence, and determining that the target electronic evidence has been stored by the candidate blockchain ledger platform; and
in response to that there is no transaction whose transaction hash is the target transaction hash among the transactions recorded by the candidate blockchain ledger platform, determining that the target electronic evidence is not stored by the candidate blockchain ledger platform.

16. The apparatus according to claim 13, wherein the determining whether the target electronic evidence has been stored by the at least one candidate blockchain ledger platform specifically includes:
obtaining the target electronic evidence and a target transaction hash uploaded by a user;
querying a candidate blockchain ledger platform based on the target transaction hash to determine, among transactions recorded by the candidate blockchain ledger platform, whether there is a transaction whose transaction hash is the target transaction hash;
in response to that there is a transaction whose transaction hash is the target transaction hash among the transactions recorded by the candidate blockchain ledger platform, identifying the transaction whose transaction hash is the target transaction hash as a target transaction, determining whether electronic evidence stored by the target transaction is a same as the target electronic evidence, in response to that the electronic evidence stored by the target transaction is the same as the target electronic evidence, determining that the target electronic evidence has been stored by the candidate blockchain ledger platform, and in response to that the electronic evidence stored by the target transaction is not the same as the target electronic evidence, determining that the target electronic evidence is not stored by the candidate blockchain ledger platform; and
in response to that there is no transaction whose transaction hash is the target transaction hash among the transactions recorded by the candidate blockchain ledger platform, determining that the target electronic evidence is not stored by the candidate blockchain ledger platform.

17. The apparatus according to claim 13, wherein a plurality of categories are predetermined, and a corresponding scoring rule is configured for each category of the plurality of categories; and
the determining the first score or the second score specifically includes:
determining a category of the plurality of categories that the target electronic evidence belongs to as a target category; and
determining the first score or the second score based on a scoring rule corresponding to the target category.

18. The apparatus according to claim 17, wherein a plurality of score intervals corresponding to each category of the plurality of categories are predetermined, and an authenticity reference level corresponding to each score interval corresponding to the category is configured; between two score intervals of the plurality of score intervals, a score interval with a larger left endpoint value corresponds to a higher authenticity reference level; and
the target procedure further includes:
determining, as a target score interval from the score intervals corresponding to the target category, a score interval into which the authenticity reference score corresponding to the target electronic evidence falls; and
determining an authenticity reference level corresponding to the target score interval as an authenticity reference level corresponding to the target electronic evidence.

19. The apparatus according to claim 18, wherein the target procedure further includes:
for a category of the plurality of categories,
obtaining an authenticity confidence level corresponding to each electronic evidence belonging to the category, the authenticity confidence level corresponding to the electronic evidence being confirmed by a judicial procedure;
selecting, among the electronic evidence belonging to the category, electronic evidence whose authenticity reference level and authenticity confidence level are inconsistent as identified electronic evidence; and
in response to that a ratio between the identified electronic evidence and the electronic evidence belonging to the category is greater than a threshold ratio, adjusting one or more of a scoring rule and a score interval corresponding to the category based on the authenticity confidence level corresponding to each identified electronic evidence, the authenticity reference level corresponding to each identified electronic evidence that is obtained based on the adjusted one or more of the scoring rule and the score interval corresponding to the category being consistent with the authenticity confidence level corresponding to the identified electronic evidence.

20. The apparatus according to claim 13, wherein the determining the second score as the authenticity reference score corresponding to the target electronic evidence specifically includes:
determining whether the target electronic evidence is stored by a non-candidate blockchain ledger platform specified by a user;
in response to that the target electronic evidence is stored by the non-candidate blockchain ledger platform specified by the user, determining a third score corresponding to the target electronic evidence as the authenticity reference score corresponding to the target electronic evidence; and
in response to that the target electronic evidence is not stored by the non-candidate blockchain ledger platform specified by the user, determining a second score corresponding to the target electronic evidence as the authenticity reference score corresponding to the target electronic evidence;
wherein the third score is greater than the second score, and the third score is less than the first score.

21. The apparatus according to claim 13 or 20, wherein the determining the second score specifically includes:
determining a specified score as the second score;
or
in response to determining that a specified condition is met, determining a score greater than the specified score as the second score; and
wherein the determining that the specified condition is met specifically includes:
determining electronic evidence most similar to the target electronic evidence among electronic evidence stored by each candidate blockchain ledger platform as similar electronic evidence corresponding to the target electronic evidence;
calculating a similarity score between the target electronic evidence and the similar electronic evidence as a similarity score corresponding to the target electronic evidence, a greater similarity score corresponding to the target electronic evidence indicating that the target electronic evidence is more similar to the similar electronic evidence;
selecting a similarity score that is greatest among similarity scores corresponding to the target electronic evidence as a greatest similarity score; and
in response to that the greatest similarity score is greater than a threshold similarity score, determining that the specified condition is met.

22. The apparatus according to claim 13, further comprising:
a first correction module, configured to: in response to that it is determined that there is no responding evidence, increase the authenticity reference score corresponding to the accusation evidence.

23. The apparatus according to claim 13, further comprising:
a second correction module, configured to: in response to that the authenticity reference score corresponding to the responding evidence meets a predetermined correction triggering condition, correct the authenticity reference score corresponding to the accusation evidence.

24. The apparatus according to claim 23, wherein the second correction module is configured to: in response to that the authenticity reference score corresponding to the responding evidence is greater than a first specified threshold score, as the predetermined correction triggering condition, decrease the authenticity reference score corresponding to the accusation evidence; and in response to that the authenticity reference score corresponding to the responding evidence is less than a second specified threshold score, as the predetermined correction triggering condition, increase the authenticity reference score corresponding to the accusation evidence, wherein the first specified threshold score is greater than the second specified threshold score.

25. A computer device, comprising a memory, a processor, and a computer program that is stored in the memory and that can run on the processor, and the processor implementing the method according to any one of claims 1 to 12 when executing the program.
